# EUROPEAN PATENT APPLICATION

(11) **EP 4 253 931 A1**
(43) Date of publication of application: **04.10.2023**
(21) Application number: 22193103.3
(22) Date of filing: 31.08.2022
(51) Int. Cl.: G01M 3/04, G01M 3/40, G01S 13/88

(54) **NON-INVASIVE DIAGNOSTIC SYSTEM FOR REAL TIME DETECTION OF NEAR-SURFACE WATER LEAKAGE IN URBAN AND SUBURBAN CONTEXTS**

(30) Priority: 30.03.2022 IT 202200001325 U
(71) Applicant: Dyrecta Lab S.r.l., 70014 Conversano (IT); Faver S.p.A., 70124 Bari (IT)
(72) Inventor: Di Marzo, Gaetano, Bari (IT); Ruggiero, Vincenzo, Bari (IT); Galiano, Angelo, Bari (IT); Pellicani, Leonardo, Bari (IT)

(57) **Abstract**

The invention belongs to technical fields of high resolution non-destructive geophysical prospection and image processing, for purposes of environmental sustainability and optimal resource management. The specific problem to be tackled is the real-time detection of near surface water leakage in complex sites, such as urban and suburban contexts, where the presence of significant heterogeneities limit the correct reconstruction of subsurface. The localization of water leakage is carried out by integrating Ground Penetrating Radar (GPR) technology with advanced image processing tools, with subsequent direct recognition of water leakage features on acquired GPR profiles.

## Description

The presented invention belongs to technical fields of high resolution non-invasive geophysical prospecting and image processing, for purposes of environmental sustainability and optimal resource management.

The problem of identifying water leakage in buried pipeline has already been addressed in the past. By analysing already released patents, it is possible to recognize the relevance of the problem and the lack of an efficient solution, from an economic perspective.

Generally speaking, the problem of water leaks has been addressed by means of various technologies including thermography, leakage monitoring and management methods and high-resolution geophysical prospecting, such as the Ground Penetrating Radar (GPR). In the following, patents related to the adoption of aforementioned technologies for the recognition of water leakage are presented.

The patent [1] solves the problem of identifying water leaks using GPR in urban contexts. Although different material conditions are simulated, by incorporating different configurations for the verification tests, the problem of early identification of leaks in highly heterogeneous urban and suburban contexts remains unsolved.

Within [2] a monitoring system and a methodology for identifying water leaks by means of advanced data analysis tools is presented. However, the system requires both the setup of different devices through the water distribution network and the corresponding storage of information, in order to be able to identify water leaks.

In [3] the invention allows the detection of leaks within urban draining systems. In particular, the presented methodology requires the collection of historical information, i.e., liquid levels within the pipe, as input to correctly establish the state of the drainage system.

Inventors of [4] proposed a combined solution for diagnosis and maintenance of pipeline, by integrating non-invasive prospecting methods, the electromagnetic and the acoustic one, respectively. Although the problem of water leaks identification is solved, the patent is based on a sequential procedure, which requires at first GPR data and subsequently acoustic data, hence increasing processing times and limiting a real time interpretation of results.

The patent [5] presents a system for detection of water leaks by integrating hardware and processing units for data collection, processing. The system can accurately detect leaks in urban contexts.

The invention [6] describes methodologies for detecting anomalies in the subsurface, such as holes and leaks, by combining infrared thermography and GPR techniques, through a multistep data processing procedure. This invention is particularly suitable to leak detection in industrial contexts, however it is based on a very time-consuming procedure.

Although several inventions for water leakage detection have already been presented, there is a lack of a specific patent for the rapid recognition of water leaks in near-surface heterogeneous materials, under conditions that can limit the unique association GPR attributes - water leakage. Furthermore, there is a lack of result validation in the field (instead of validation test in the laboratory), an aspect which enhances results' reliability in real conditions of application.

Starting from the State-of-the-art review, it is found the lack of solutions capable of solving the problem of recognizing water leaks in near-surface heterogeneous materials, in contexts where the presence of heterogeneities may cause the electromagnetic signal's attenuation, thus limiting the correct reconstruction of the first subsurface levels.

The main difficulty limiting the use of GPR for detection of water leaks in the subsoil relies in the need of pre- and post- processing actions, for the extraction of meaningful information from acquired profiles. These actions are typically time-consuming.

In order to overcome this critical aspect, a number of publications have been presented, in which machine learning tools are introduced to speed up leaks' recognition on GPR profiles and, hence, automate the selection of attributes that can be associated with water leaks. However, the drawback of these solutions is that they require both a relatively complex sensor network and large amount of data for a reliable leak identification [7].

Among published papers it is also possible to find works describing alternatives to GPR, to solve the water leakage problem: these are scientific contributions focusing on the application of thermography (Infrared thermography IRT) for purposes of identifying leaks in water networks, based on the analysis of changes in temperature [8], [9]. The main limitation of IRT technology relies on its strong dependence on weather conditions, cloud cover, solar radiation, environmental temperature and surface conditions, all being factors preventing the unique association of IRT-features to water leaks.

The assessment of losses in water distribution networks (Water Distribution Networks) represents a further alternative approach for purposes of water loss recognition. Additional solutions include measurements acquired through water distribution systems as well as wireless sensor networks for data collection together with an ad-hoc communication infrastructure for their remote transmission. These are solutions that, if on the one hand require the availability of measurements that are not easy to get, on the other hand they involve significant maintenance costs in addition to issues related to poor network stability [10], [11], [12], [13].

It has to be underlined that several scientific publications have already described GPR method's ability to identify water leaks in relatively homogeneous materials, such as sand levels prepared by means of specific experimental setups [14], [15], [16].

However, the technical problem of identifying, through a non-invasive approach, water leakage in urban and suburban sites, in conditions where the presence of significant heterogeneities may introduce ambiguity in data interpretation, remains unsolved.

The hereby proposed solution is capable to overcome difficulties associated to the presence of site heterogeneities that usually limit fast and accurate detection of water leaks in these areas. The presented procedure allows the recognition of water leaks attributes within a heterogeneous subsoil.

**The invention concerns the combined use of GPR and advanced image processing for the location of near-surface water leaks.** Due to heterogeneity conditions that typically characterize more surficial terrain levels, the accurate identification of water leak attributes starting from GPR data is quite complex. With the support of advanced image processing techniques, it is possible to overcome this limitation and correctly recognize water leaks.

In particular, the invention is based on the integration of non-destructive, low-cost technologies for the real time recognition of water leaks attributes in the subsoil. In this way, sub-surface water leaks, not immediately visible, can be easily identified from first stages of formation, thus limiting huge costs associated to significant water leaks or to the replacement of large parts of water supplies. Besides, this solution incorporates an added value due to its ability to control water resources, hence supporting water scarcity problems.

### The system consists of:

- **GPR unit with central frequency between 600 and 800 MHz;**
- **Processing unit for GPR data and image processing.**

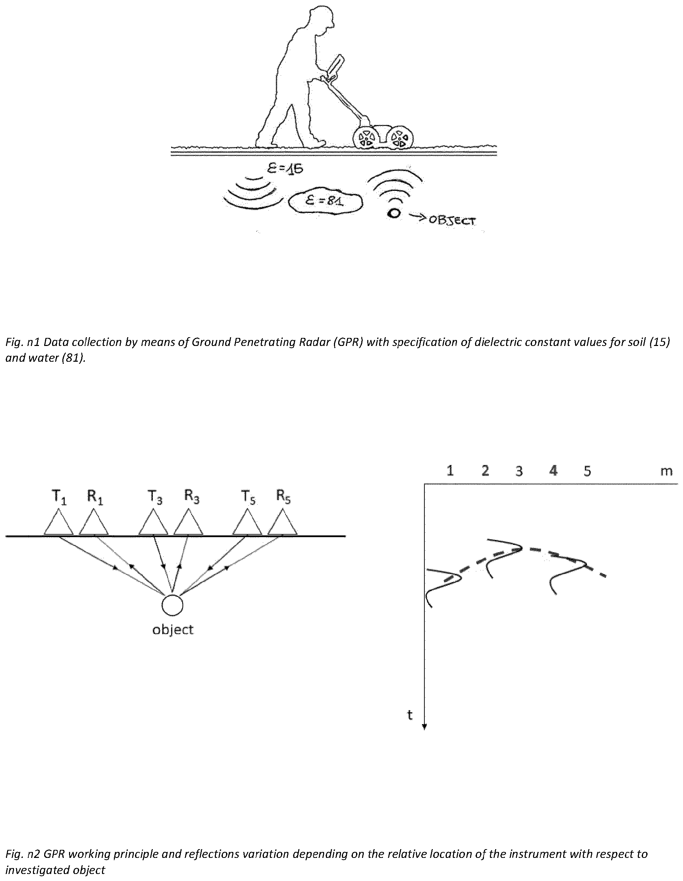

The GPR unit allows the electromagnetic signal to be sent in the subsurface and subsequently received on the surface, following an acquisition procedure shown in Fig. 1; the processing unit allows analysis and processing of acquired GPR data. The system is also equipped with a module for transmitting acquired data in wireless mode.

GPR working principle is presented in Fig. 2. The electromagnetic wave is transmitted in the underground through a transmitting antenna (T) and subsequently recorded through a receiving antenna (R). Both signal transmitting and recording are performed in several points, a few of those are indicated in figure as T₁, T₃, T₅, R₁, R₃ e R₅. The minimum travel time (two-way) is registered for data acquired along the direction perpendicular to the object, corresponding to T₃, R₃; longer travel times will be associated to signals acquired before and after crossing the object, T₁, R₁ e T₅, R₅ respectively. Reflections of electromagnetic waves due to the presence of the object will be placed on the profile along a hyperbola.

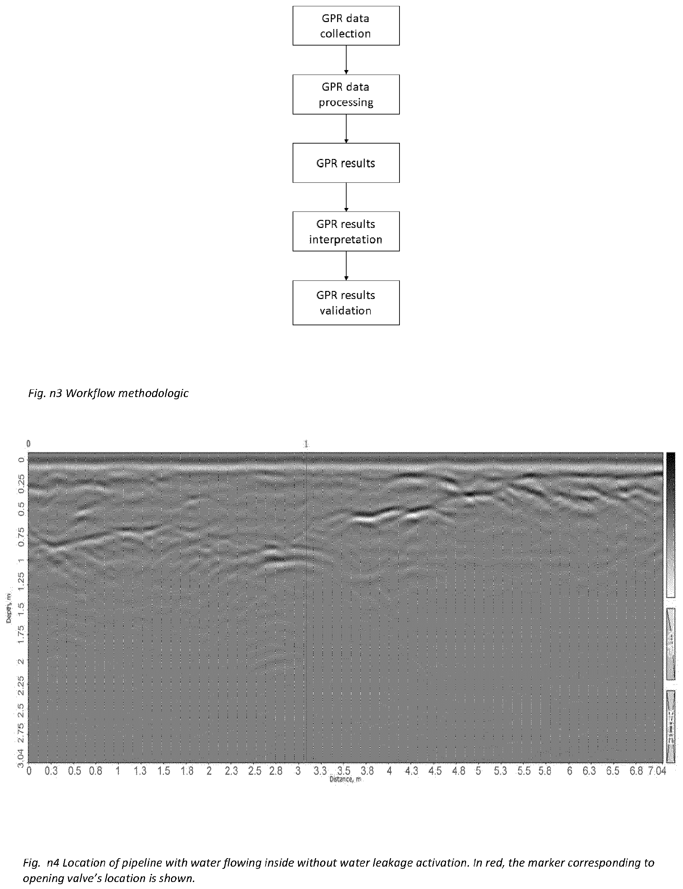

Main operations to be carried out for tackling the problem are summarized in Fig. 3. First, GPR data are collected by adopting an instrument having a central frequency between 600 and 800 MHz, depending on the resolution. Secondly, processing operations are carried out to improve signal / noise ratio, remove distortions and correctly reconstruct the object's depth. The subsequent phase of results interpretation is supported by image processing tools allowing for the identification of water leakage features on the profile.

The GPR unit with a central frequency between 600 and 800 MHz has been moved across the surface of the ground. During data acquisition operation, by means of Prism2 software (RadarTeam), a marker can be inserted at leakage's location, appearing as a red line on the profile, as shown in Fig. 4 e 5.

Processing operations are carried out through the same software. In the following, steps required for the correct reconstruction of subsurface and the consequent location of water leakage are indicated:
1. Data collection: GPR profiles are acquired by means of a GPR Unit, with central frequencies in the range of 600 - 800 MHz; this allows a penetration depth up to 3 m. A value for the dielectric constant equal to 15 is chosen to approximate natural soil condition, as shown in Fig. 1.
2. Data processing: after collecting data, the following actions are pursued.
   a. Background removal, application of band pass filtering for signal / noise improvement, removal of artifacts from raw data, such as horizontal reflectors caused by signal ringing;
   b. Topographic corrections to eliminate distortions in the GPR profile due to the travel-time view;
   c. Depth migration to correctly reconstruct the object's depth, (in this case depth's pipe affected by leakage) and the correct location of lateral reflectors, starting from two-way travel times of the electromagnetic wave passing through the subsoil, by assuming a single value of dielectric constant for surveyed material (i.e., 15 for soil; 81 for water);
   d. Image processing and edge detection to reconstruct edges of water leakage's feature on the profile.

Considering that natural soil can be approximated by a dielectric constant equal to 15, the propagation velocity of the electromagnetic waves through the material is equal to 0.07 m/ns, being the speed of light in vacuum equal to 0.3 m/ns. The wavelength measured at 800 MHz is then equal to 0.09 m; the minimum distance between two vertically separated targets (signal vertical resolution) depends on the wavelength and is equal to 0.02 m.

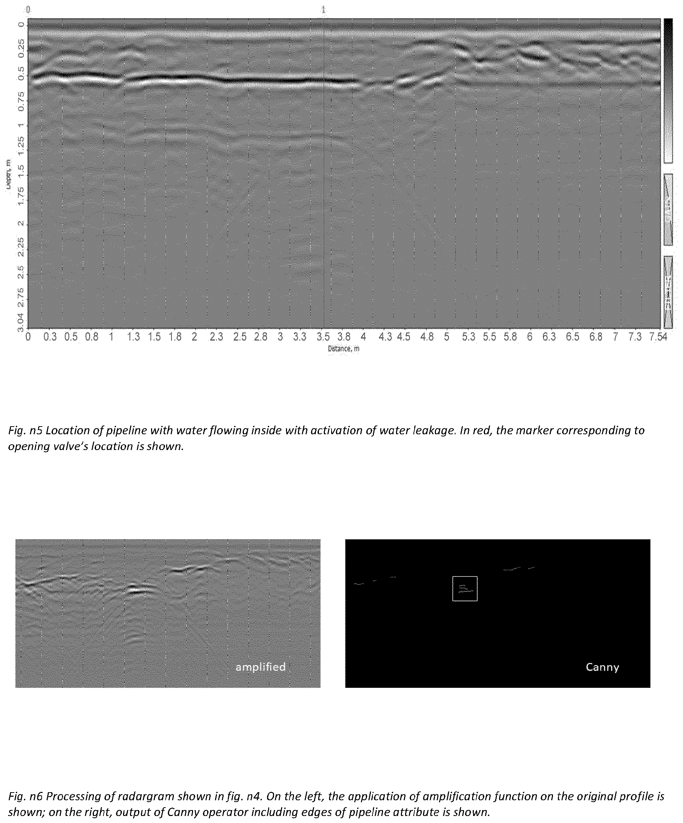

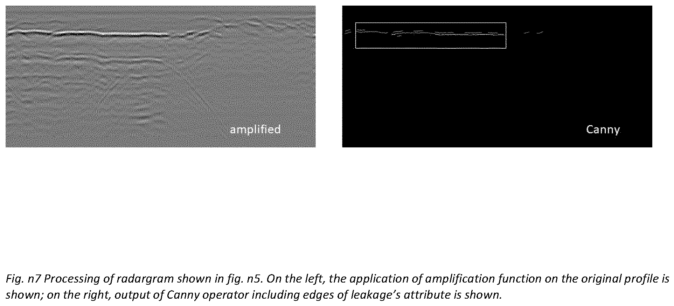

As far as image processing is concerned, after the completion of actions described in 2.a - 2.c, Canny's algorithm is applied to detect water leak's edges (Fig. 6 and 7). Image processing workflow requires at first the application of an amplification function on the GPR profile image, and, subsequently, the implementation of Canny's algorithm to detect leak's edges.

Specifically, Canny's algorithm relies on the calculation of gradients with respect to four main image directions (vertical, horizontal and two diagonals), by means of the Sobel operator, to determine the points that make up the outline of an object. Afterwards, starting from the initial image points, only those which are representative of local maxima are selected, i.e., those having null derivative.

Considering as input a black and white image, with 8 bits of gray gradations and a scale of intensity values ranging from 0 to 255 (0 indicating black level and 255 white), a minimum and maximum threshold equal to 200 and 250 are identified. In this way the algorithm selects the highest gradients corresponding to the rapid transitions from black and white levels (corresponding to reflections on the radargram). In addition, the Sobel operator adopts a 3x3-sized kernel.

The identified points are subjected to a thresholding with hysteresis, where the minimum and maximum threshold allow the selection of single contour points in the following way:
- If the gradient value is lower than the minimum threshold, the point is discarded;
- If the gradient value is higher than the maximum threshold, the point is selected as part of the outline;
- If the value is within the range, the point is selected as part of the outline only if it is contiguous to an already selected point.

For results validation, an experimental setup was prepared by including pipes having a diameter of 18 cm and a length of 4 m. Specifically, two pipes have been positioned in the underground at 1m depth. In particular, one of the pipes has been built up in such a way to include a valve which can be opened or closed on demand for activation or deactivation of water flow, hence simulating the leakage.

Following operations have been carried out:
- Prospection of pipe in dry condition;
- Prospection of water-filled pipe, without simulating a water leakage;
- Prospection of water-filled pipes, including water leakage simulation at different time.

Processed GPR profiles including attributes linked to water leaks are shown in Fig. 6 and 7. As it can be seen from Fig. 6, the presence of a parabola on the profile clearly indicates the existence of the pipe. In particular, the presence of water flowing inside causes an enhanced contrast in dielectric constants values (15 for natural soil and 81 for water), hence highlighting the feature on the profile.

After activating the leak through the valve, new horizons appear on the radargram at about 0.5 m depth, thus confirming the association between new reflectors and water leakage. By increasing the leakage time, these new reflectors become stronger. The strength of the leak signal is confirmed by the presence of multiple reflections on the profile, commonly associated to strong reflections.

In conclusion, the instrumental and methodological solution is capable to survey natural soil and detect water leakage affecting pipes till a depth of 3 meters. Results validation and test confirm the method's capability to ascertain water leaks already after a few minutes from leak's activation. The presented invention can tackle and achieve fast and accurate GPR data processing and, finally, identify leakage's location. In this way, it is possible to immediately act in field, hence avoiding a large amount of water loss. Finally, it should be noted that the presented system may be integrated with other non-invasive technologies, including thermal imaging cameras, and remotely piloted aircraft systems configurations.

### References:

[1] G. XINLEI, H. ZHIPENG, C. DUANWU, M. CHAOMENG, F. HUI, L. JIAZHEN, W. TAO, G. YONGXIN, P. JIAJIA, S. CHUNRONG e Y. TAO, «Automatic identification method and system for detecting pipeline leakage based on ground penetrating radar». China Brevetto CN111853557A, 30 10 2020.
[2] L. WEICHENG, L. YIMING, Z. HUANRAN e C. SUYING, «Monitoring system and method for water delivery network». China Brevetto CN110864225A, 06 03 2020.
[3] T. TAO, X. TAO, X. KUNLUN, L. SHUPING, Y. HEXIANG e W. JIAYING, «Method for diagnosing operation state of drainage system based on liquid level monitoring». China Brevetto CN111667168A, 15 09 2020.
[4] K. S. J. [KR] e B. Y. WON, «Systems for maintaining managing and exploring pipe networks». Korea, Republic Brevetto KR102002480B1, 3 07 2019.
[5] Z. SIXIANG, H. XUEYING, Z. WEI, Z. YEJIA, L. MO e L. ZHONGMIN, «Conduit leak testing system». China Brevetto CN206861268U, 09 01 2018.
[6] W. G. J. [US], «System of subterranean anomaly detection and repair using infrared thermography and ground penetrating radar». US Brevetto US7218267B1, 15 05 2007.
[7] W. P. Cantos, I. Juran e S. Tinelli, «Machine-learning-based risk assessment method for leak detection and geolocation in a water distribution system.,» Journal of Infrastructure Systems, vol. 26(1), p. 04019039, 2020.
[8] M. H. Manekiya e P. Arulmozhivarman, «Leakage detection and estimation using IR thermography.,» In 2016 International Conference on Communication and Signal Processing (ICCSP). IEEE., pp. 1516-1519, 2016.
[9] H. Aslam, M. M. Mortula, S. Yehia, T. Ali e M. Kaur, «Evaluation of the Factors Impacting the Water Pipe Leak Detection Ability of GPR, Infrared Cameras, and Spectrometers under Controlled Conditions.,» Applied Sciences, vol. 12(3), p. 1683, 2022.
[10] G. Mazzolani, L. Berardi, D. Laucelli, R. Martino, A. Simone e O. Giustolisi, «A methodology to estimate leakages in water distribution networks based on inlet flow data analysis.,» Procedia engineering, vol. 162, pp. 411-418, 2016.
[11] M. Righetti, C. M. G. Bort, M. Bottazzi, A. Menapace e A. Zanfei, «Optimal selection and monitoring of nodes aimed at supporting leakages identification in WDS.,» Water, vol. 11(3), p. 629, 2019.
[12] Y. Liu, X. Ma, Y. Li, Y. Tie, Y. Zhang e J. Gao, «Water pipeline leakage detection based on machine learning and wireless sensor networks.,» Sensors, vol. 19(23), p. 5086, 2019.
[13] L. Berardi e O. Giustolisi, «Calibration of design models for leakage management of water distribution networks.,» Water Resources Management, vol. 35(8), pp. 2537-2551, 2021.
[14] S. Eyuboglu, H. Mahdi, H. Al-Shukri e L. Rock, «Detection of water leaks using ground penetrating radar.,» In Proceedings of the Third International Conference on Applied Geophysics, Orlando-FL, pp. 8-12, 2003.
[15] L. Dong, S. Carnalla e M. Shinozuka, «GPR survey for pipe leakage detection: experimental and analytical study.,» In Nondestructive Characterization for Composite Materials, Aerospace Engineering, Civil Infrastructure, and Homeland Security , pp. 96-102, 2012.
[16] T. S. T. Amran, M. P. Ismail, M. R. Ahmad, M. S. M. Amin, M. A. Ismail, S. Sani e N. S. M.... & Basri, «Monitoring underground water leakage pattern by ground penetrating radar (GPR) using 800 MHz antenna frequency.,» In IOP Conference Series: Materials Science and Engineering, vol. 298, n. 1, p. 012002, 2018.

## Claims

1. Non-invasive diagnostic system for real-time recognition of near surface water leakage in urban and suburban contexts, consisting of a GPR unit with transmitting and receiving antenna and a central frequency in the range 600 - 800 MHz, for data collection, that, starting from physical properties contrast, detected through data acquired by the GPR unit, by adopting an algorithm with a process fusion and image processing function, allows both localization and geometric water leak reconstruction, within a maximum depth of 3 meters.

2. The system as in claim 1, **characterized by** the use of an algorithm with process fusion functions, which allows the implementation of data processing to improve the signal / noise ratio;

3. The system as in claim 1, **characterized by** the use of an algorithm with image processing functions which uniquely identifies an underground water leak on the GPR profile, starting from a contrast of electromagnetic properties, hence reconstructing leak's edges.
